# EUROPEAN PATENT APPLICATION

(11) **EP 4 133 946 A1**
(43) Date of publication of application: **15.02.2023**
(21) Application number: 21784981.9
(22) Date of filing: 22.02.2021
(51) Int. Cl.: A23F 3/16, A23L 27/20, A23L 2/00, A23L 2/56

(54) **TEA-FRAGRANCE-IMPARTING LIQUID COMPOSITION HAVING GREEN LAVER SCENT**

(30) Priority: 06.04.2020 JP 2020068328
(71) Applicant: Suntory Holdings Limited, Osaka 530-8203 (JP)
(72) Inventor: KIKUCHI, Keita, Kawasaki-shi, Kanagawa 211-0067 (JP); YONEZAWA, Daisaku, Kawasaki-shi, Kanagawa 211-0067 (JP); OTSUKA, Makoto, Soraku-gun, Kyoto 619-0284 (JP); MUKAI, Takashi, Soraku-gun, Kyoto 619-0284 (JP); NAKAJIMA, Takeshi, Tokyo 135-8631 (JP); HIRAYAMA, Yuji, Soraku-gun, Kyoto 619-0284 (JP); OSANAI, Taisuke, Kawasaki-shi, Kanagawa 211-0067 (JP); HAMABA, Taishu, Kawasaki-shi, Kanagawa 211-0067 (JP)
(74) Representative: Vossius & Partner Patentanwälte Rechtsanwälte mbB
(86) International application number: PCT/JP2021/006562
(87) International publication number: WO 2021/205764

(57) **Abstract**

An object of the present invention is to provide an aromatizing material that has green laver aroma and makes one feel its aroma in a sustained way.

The tea aromatizing liquid composition comprises dimethyl sulfide and β-ionone, and has a weight ratio of β-ionone content to dimethyl sulfide content which is adjusted to be in the range of from 0.01 to 3.5.

## Description

### TECHNICAL FIELD

The present invention relates to a tea aromatizing liquid composition, and more particularly to a tea aromatizing liquid composition having green laver aroma.

### BACKGROUND ART

Tea beverages produced from processed tea leaves are widely consumed not only in Japan but also in other countries throughout the world. Some tea beverages are sold in the form of packaged beverages which are beverages sterile packed in packages such as PET bottles or cans, or other tea beverages are sold in the form of tea powders which are made by drying and powdering tea into a powdery form and are intended to be consumed while dissolved in cold or hot water, or the like. In recent years, different aromatizing materials have been used in various types of tea beverages with a view to further improving the aroma of tea beverages. In particular, there is a strong demand for tea beverage manufacturers to develop an aromatizing material with excellent aroma.

As an aromatizing material used in tea beverages, there is disclosed, for example, a liquid source material for green tea beverages, comprising dimethyl sulfide, linalool, a leaf alcohol, caffeine and tannin at a specified content ratio (PTL 1). As a tea beverage produced using an aromatizing material, there is disclosed a packaged green tea beverage having a caffeine concentration reduced to not more than 50 ppm, wherein the packaged green tea beverage comprises dimethyl sulfide and a decaffeinated tea concentrate (PTL 2). Further, various ingenuities have been implemented for the production of aromatizing materials -- for example, there is disclosed a method for producing a tea essence using tea leaves as a source material, the method comprising a step of mixing a distillate collected by distilling the tea leaves with steam and a liquid extract obtained by further extracting distillation residues with water (PTL 3).

### CITATION LIST

### PATENT LITERATURES

PTL 1: Japanese Unexamined Patent Application Publication No. JP 2007-110990
PTL 2: Japanese Unexamined Patent Application Publication No. JP 2016-111970
PTL 3: Japanese Unexamined Patent Application Publication No. JP 2008-92817

### SUMMARY OF INVENTION

### TECHNICAL PROBLEM

Tea beverages, *inter alia* high-grade green tea beverages, have characteristic aromas -- one of those characteristic aromas is called "green laver aroma". However, there have been little known aromatizing materials excellent in aroma, in particular green laver aroma. Therefore, an object of the present invention is to provide an aromatizing material that has green laver aroma and makes one feel its aroma in a sustained way.

### SOLUTION TO PROBLEM

The present inventors have made intensive studies to achieve the aforementioned object, and as a result found that while it has conventionally been known that dimethyl sulfide has green laver aroma, further incorporating β-ionone in combination with dimethyl sulfide yields a composition that makes one feel green laver aroma characteristic of high-grade tea in a significant way. Further, the inventors found that when the ratio of dimethyl sulfide content to β-ionone content is adjusted to be within a specified range, the composition can make one feel green laver aroma characteristic of high-grade tea in a sustained way. Based on these findings, the inventors have completed the present invention.

The present invention is directed, but not limited, to the following.
(1) A tea aromatizing liquid composition comprising dimethyl sulfide and β-ionone, and having a weight ratio of β-ionone content to dimethyl sulfide content of from 0.01 to 3.5.
(2) The composition as set forth in (1), further comprising at least one aroma component selected from the group consisting of α-ionone, β-cyclocitral, (z)-3-hexenol, 1-penten-3-ol, and nerolidol.
(3) A beverage or food comprising the composition as set forth in (1) or (2).
(4) The beverage or food as set forth in (3), wherein the beverage or food is a beverage.

### ADVANTAGEOUS EFFECTS OF INVENTION

According to the present invention, there can be provided an aromatizing material that has green laver aroma and makes one feel its aroma in a sustained way. The tea aromatizing liquid composition of the present invention can be used as a source material to make beverages, and can effectively impart green laver aroma characteristic of high-grade tea to beverages in general. In particular, the tea aromatizing liquid composition of this invention is effective for imparting green laver aroma to packaged beverages which are packed in PET bottles, cans, etc.

The tea aromatizing liquid composition of the present invention can be used not only for beverages but also for foods. In recent years, there has been a tendency toward an increase in the number and types of tea flavored foods. By using the tea aromatizing liquid composition of this invention, green laver aroma characteristic of high-grade tea can be imparted to, for example, confectionary foods, such as cakes, sponge cakes, candies, cookies, jellies, and puddings.

### DESCRIPTION OF EMBODIMENTS

### (Tea aromatizing liquid composition)

Hereunder, the tea aromatizing liquid composition of the present invention will be described. Unless otherwise specified, the terms "ppm", "ppb" and "wt.%" as used herein refer respectively to ppm, ppb, and wt.% on a weight/volume (w/v) basis.

One embodiment of the present invention is directed to a tea aromatizing liquid composition comprising dimethyl sulfide and β-ionone, and having a weight ratio of β-ionone content to dimethyl sulfide content of from 0.01 to 3.5. By adopting the aforementioned composition profile, the tea aromatizing liquid composition can exhibit green laver aroma and make one feel its aroma in a sustained way. As referred to herein, the term "green laver aroma" refers to an aroma that combines a faint roasted aroma with a sweet scent and the smell of seashore.

As referred to herein, the term "tea aromatizing liquid composition" refers to a liquid composition that comprises an aroma component obtained from tea leaves as a source material (tea leaf-derived aroma component), and which is used for dilution or dispersion in products of interest, such as beverages and foods, and can impart the aroma derived from tea leaves to the products of interest.

The tea leaves that can be used as a source material in the present invention are leaves obtained from plants belonging to the family *Theaceae,* genus *Camella* (*e.g., Camellia sinensis* (L) O. Kuntze). In this invention, green tea leaves are advantageously used. In general, during the process of making green tea leaves, freshly picked fresh tea leaves are first processed into *Ara-cha* (crude tea) through taking the following steps in this order: steaming, rough rolling, rolling, medium rolling, fine rolling, and drying. Then, *Ara-ch*a is further processed into *Shiage-cha* (finished tea) through taking the following steps in this order: sieving, cutting, firing/drying, sorting, and blending. As referred to in this invention, the term "tea leaves" refers to tea leaves obtained by processing fresh tea leaves from plants of the family *Theaceae,* genus *Camellia* through taking the aforementioned steps, and examples thereof include all types of steamed, non-fermented tea leaves, such as *Ara-cha, Sencha* (brewed green tea), *Gyokuro* (refined green tea), *Kabuse-cha* (shaded green tea), *Tencha* (non-ground tea leaves used for *Matcha*), *Bancha* (coarse green tea), and *Houji-cha* (roasted green tea). In this invention, two or more types of tea leaves may be used in a blended form. In this invention, tea leaves grown by shielding the sunlight before picking up, such as *Kabuse-cha, Gyokuro* or *Tencha,* are particularly preferably used.

The tea aromatizing liquid composition of the present invention comprises dimethyl sulfide and β-ionone. Dimethyl sulfide is an organic sulfur compound represented by the structural formula (CH₃)₂S, and is known as a laver aroma component. β-Ionone is one of the three isomers of ionones, a subclass of terpenoid compounds, which differ in double-bond location, and is known to smell like violet flowers or cedarwood oil.

In the tea aromatizing liquid composition of the present invention, the weight ratio of β-ionone content to dimethyl sulfide content is in the range of from 0.01 to 3.5. While, as mentioned above, dimethyl sulfide is known as an aroma component having green laver aroma, the use of dimethyl sulfide alone puts too strong an emphasis on the roasted green laver aroma felt as a top note, so that the excellent green laver aroma of high-grade green tea beverages like *Gyokuro* is difficult to achieve. However, combined use of β-ionone with dimethyl sulfide at the aforementioned weight ratio gives a gorgeous sweet aroma as felt as a last note of high-grade tea beverages like *Gyokuro,* thereby yielding a composition that makes one feel a profound green laver aroma with an excellent balance of fragrance notes. Also, by having a good balance of fragrance notes, the composition can make one feel a good aroma of green laver from the top note to the last note in a sustained way.

The weight ratio of β-ionone content to dimethyl sulfide content in the tea aromatizing liquid composition of the present invention is preferably not less than 0.02, not less than 0.05, not less than 0.10, not less than 0.15, not less than 0.20, not less than 0.25, not less than 0.30, not less than 0.35, not less than 0.40, not less than 0.45, or not less than 0.50. Also, the weight ratio of β-ionone content to dimethyl sulfide content in the tea aromatizing liquid composition of this invention is preferably not more than 3.3, not more than 3.0, not more than 2.8, not more than 2.5, not more than 2.3, not more than 2.0, not more than 1.8, not more than 1.5, not more than 1.3, or not more than 1.0. Typically, the weight ratio of β-ionone content to dimethyl sulfide content in the tea aromatizing liquid composition of this invention is in the range of preferably from 0.05 to 3.0, more preferably from 0.1 to 2.5, still more preferably from 0.2 to 2.0.

The dimethyl sulfide content in the tea aromatizing liquid composition of the present invention is not particularly limited, and is for example not less than 50 ppb, preferably not less than 100 ppb, not less than 500 ppb, not less than 1000 ppb, not less than 2000 ppb, not less than 3000 ppb, not less than 5000 ppb, not less than 7000 ppb, not less than 10000 ppb, or not less than 13000 ppb. When the dimethyl sulfide content falls within the aforementioned range, the tea aromatizing liquid composition can exhibit green laver aroma. The upper limit of the dimethyl sulfide content in the tea aromatizing liquid composition of this invention is not particularly limited. For example, the dimethyl sulfide content is not more than 1000000 ppb, not more than 800000 ppb, or not more than 500000 ppb. Thus, the dimethyl sulfide content in the tea aromatizing liquid composition of this invention is typically in the range of from 50 to 1000000 ppb, preferably from 1000 to 800000 ppb, more preferably from 3000 to 800000 ppb.

The β-ionone content in the tea aromatizing liquid composition of the present invention is not particularly limited, and is for example not less than 1 ppb, preferably not less than 5 ppb, not less than 10 ppb, not less than 50 ppb, not less than 100 ppb, not less than 120 ppb, not less than 150 ppb, not less than 170 ppb, not less than 200 ppb, not less than 220 ppb, not less than 250 ppb, not less than 270 ppb, not less than 300 ppb, not less than 350 ppb, not less than 500 ppb, not less than 700 ppb, not less than 1000 ppb, not less than 1500 ppb, not less than 2000 ppb, not less than 2500 ppb, or not less than 3000 ppb. When β-ionone is present at a concentration within the aforementioned range in combination with dimethyl sulfide, the tea aromatizing liquid composition of this invention can exhibit a well-balanced and more excellent aroma of green laver. The upper limit of the β-ionone content in the tea aromatizing liquid composition of this invention is not particularly limited. For example, the β-ionone content is not more than 700000 ppb, not more than 500000 ppb, not more than 300000 ppb, not more than 200000 ppb, or not more than 100000 ppb. Thus, the β-ionone content in the tea aromatizing liquid composition of this invention is typically in the range of from 1 to 7000000 ppb, preferably from 100 to 300000 ppb, more preferably from 1000 to 200000 ppb.

The tea aromatizing liquid composition of the present invention can further comprise, in addition to dimethyl sulfide and β-ionone as mentioned above, at least one aroma component selected from the group consisting of α-ionone, β-cyclocitral, (z)-3-hexenol, 1-penten-3-ol, and nerolidol. When such aroma components are incorporated in the tea aromatizing liquid composition of this invention, the tea aromatizing liquid composition can exhibit a better-balanced aroma of green laver.

The α-ionone content in the tea aromatizing liquid composition of the present invention is in the range of, for example, from 0.01 to 100 ppm, preferably from 0.1 to 100 ppm, more preferably from 1 to 100 ppm. The β-cyclocitral content in the tea aromatizing liquid composition of this invention is, for example, from 0.01 to 100 ppm, preferably from 0.1 to 100 ppm, more preferably from 1 to 100 ppm. The (z)-3-hexenol content in the tea aromatizing liquid composition of this invention is in the range of, for example, from 0.01 to 100 ppm, preferably from 0.1 to 100 ppm, more preferably from 1 to 100 ppm. The 1-penten-3-ol content in the tea aromatizing liquid composition of this invention is in the range of, for example, from 0.1 to 1000 ppm, preferably from 1 to 1000 ppm, more preferably from 10 to 1000 ppm. The nerolidol content in the tea aromatizing liquid composition of this invention is in the range of, for example, from 0.01 to 100 ppm, preferably from 0.1 to 100 ppm, more preferably from 1 to 100 ppm.

In the present invention, the contents of dimethyl sulfide and β-ionone in the tea aromatizing liquid composition can be measured using gas chromatography (GC). As a gas chromatographic analysis system, Flash GC Nose HERACLES II (produced by Alpha M.O.S. Japan K.K.) can be used. To be specific, the contents of the above aroma components can be measured under the conditions detailed below.

| | |
|---|---|
| Gas chromatography system: | Flash GC Nose HERACLES II |
| Column 1: | MXT-5 (slight polarity, 10 m, 180 µm ID, 0.4 µm) |
| Column 2: | MXT-WAX (high polarity, 10 m, 180 µm ID, 0.4 µm) |
| Carrier gas flow rate: | hydrogen 1.6 mL/min. |
| Hydrogen flame ionization detector (FID) temperature: | 260°C |
| Injector temperature: | 200°C |
| Oven temperature: | 40°C (5 sec.), then raised at 1.5°C/sec. to 250°C (90 sec.) |
| Injection time: | 125 sec. |
| Trap temperature: | 50°C for adsorption, 240°C for desorption |
| Trap time: | 130 sec. for adsorption, 35 sec. for preheating |

The conditions for measurement samples can be set as detailed later in the Examples section.

In the present invention, the contents of α-ionone, β-cyclocitral, (z)-3-hexenol, 1-penten-3-ol, and nerolidol in the tea aromatizing liquid composition can be measured using gas chromatography/mass spectroscopy (GC/MS). To be specific, the contents of the above aroma components can be measured under the conditions detailed below.

System:

| | |
|---|---|
| GC: | GC7890B, produced by Agilent Technologies |
| MS: | 5977A, produced by Agilent Technologies |
| HS: | MPS, produced by Gestel |
| Tube: | Tenax TA, Carbon bx1000 |
| Column: | HP-INNOWAX, 60 m × 0.25 mm i.d., df = 0.25 µm |
| Temperature conditions: | 40°C (4 min.), then raised at 5°C/min. to 260°C |
| Carrier gas flow rate: | He 1.5 mL/min. |
| Injection method: | Splitless |
| Ion source temperature: | 260°C |

The conditions for measurement samples can be set as detailed later in the Examples section.

The Brix value of the tea aromatizing liquid composition of the present invention is not particularly limited, but is in any case not more than 0.50. As referred to herein, the "Brix value" refers to a value obtained by converting a refractive index measured at 20°C using a sugar content meter, refractometer, etc. into a mass/mass percentage of sucrose in solution based on the conversion table published by ICUMSA (the International Commission for Uniform Methods of Sugar Analysis). The Brix may also be expressed in unit of "°Bx", "%" or "degree". In this invention, higher Brix values indicate higher contents of soluble solids in the tea aromatizing liquid composition -- the Brix value can be used as an index for the extent of concentration of a tea aromatizing liquid composition. In this invention, the Brix value can be measured using a commercially available Brix meter. The tea aromatizing liquid composition of this invention has a Brix value of preferably from 0.03 to 0.40, more preferably from 0.05 to 0.30, still more preferably 0.10 to 0.20.

The tea aromatizing liquid composition of the present invention preferably has a pH of from 4.5 to 10.5 at 25°C. When the tea aromatizing liquid composition of this invention has a pH within the aforementioned range, the tea aromatizing liquid composition can exhibit excellent floral aroma, and becomes easier to handle as an aromatizing agent for beverages and foods. The tea aromatizing liquid composition of this invention has a pH of more preferably from 5.0 to 10.0, still more preferably from 5.5 to 9.5. The pH adjustment can be made, as appropriate, using a pH adjustor such as citric acid, sodium citrate (*e*.*g*., trisodium citrate). or phosphoric acid. In other words, the tea aromatizing liquid composition of this invention can contain such a pH adjustor as mentioned above.

Since the tea aromatizing liquid composition of the present invention can be produced through steam distillation of tea leaves, the tea aromatizing liquid composition can comprise a tea leaf distillate. The tea aromatizing liquid composition of this invention may be a tea leaf distillate *per se,* or may be a liquid obtained by diluting or dispersing such a tea leaf distillate with a solvent such as water or an alcohol including ethanol, propylene glycol or glycerol. In other words, the tea aromatizing liquid composition of this invention can contain a diluent or dispersant such as water or an organic solvent. The tea leaf distillate content in the tea aromatizing liquid composition of this invention is not particularly limited, and is for example not less than 0.01 wt.%, not less than 0.1 wt.%, or not less than 1 wt.%, preferably not less than 5 wt.%, not less than 10 wt.%, or not less than 30 wt.%, more preferably not less than 50 wt.%. The weight ratio of diluent or dispersant content to tea leaf distillate content ([diluent or dispersant]/[tea leaf distillate]) in the tea aromatizing liquid composition of this invention is not particularly limited, and is in the range of for example from 0.001 to 150, preferably from 0.005 to 15, more preferably from 0.01 to 10.

The tea aromatizing liquid composition of the present invention not only comprises the aforementioned components, but also can have added thereto other additives commonly used in beverages and foods, such as antioxidant, preservative, sweetener, enrichment, thickening stabilizer, emulsifier, dietary fiber, and quality stabilizer, to the extent that such additives do not impair the effects of the present invention.

The tea aromatizing liquid composition of the present invention can be added to beverages and foods as it is or in the form of a dilution with water or the like. The tea aromatizing liquid composition of this invention is generally ingested in a diluted or dispersed form in products of interest, such as beverages and foods. It is preferred that the tea aromatizing liquid composition of this invention should not include a beverage or food *(e.g.,* tea beverage), *per se,* to which the tea aromatizing liquid composition is to be added. As referred to herein, the term "tea beverage" refers to a beverage that comprises a tea leaf extract as a primary component and is drunk as it is without dilution or dispersion.

Examples of beverages to which the tea aromatizing liquid composition of the present invention is to be added include, but are not limited to, tea beverages, sport drinks, carbonated beverages, fruit juice beverages, milk beverages, and alcoholic beverages, with tea beverages being particularly preferred. Examples of tea beverages include non-fermented teas *(e.g.,* green tea), semi-fermented teas *(e.g.,* oolong tea), and fermented teas *(e.g.,* black tea). Specific examples thereof include: steamed, non-fermented teas (green teas), such as *Sencha* (brewed green tea), *Bancha* (coarse green tea), *Houji-cha* (roasted green tea), *Gyokuro* (refined green tea), *Kabuse-cha* (shaded green tea), and *Tencha* (non-ground tea leaves used for *Matcha*); non-fermented teas including *Kamairicha* (pot-roasted green teas) such as *Ureshinocha, Aoyagicha,* and Chinese teas; semi-fermented teas such as *Hoshucha, Tekkannon* tea, and oolong tea; and fermented teas such as black tea, *Awa-bancha,* and puerh tea. The tea beverage in which the tea aromatizing liquid composition of this invention is used is preferably a green tea. Beverages with the tea aromatizing liquid composition of this invention added thereto can be provided as packaged beverages which are beverages packed in PET bottles, cans or other packages.

The tea aromatizing liquid composition of the present invention can also be added to foods. Examples of such foods include confectionary foods, such as cakes, sponge cakes, candies, cookies, jellies, puddings, and chocolates, frozen desserts such as ice cream, ice candy, and sherbet; and snacks, regardless of whether they are Japanese or Western confectionaries. Also, the tea aromatizing liquid composition of this invention can be used in breads or dairy products.

When the tea aromatizing liquid composition of the present invention is added to a beverage or food, the amount of the tea aromatizing liquid composition added can be determined, as appropriate, depending on, for example, the type of the beverage or food. The tea aromatizing liquid composition of this invention can be added to a beverage or food so as to ensure that the content of the tea aromatizing liquid composition in the beverage or food falls within the range of, for example, from 0.01 to 25 wt.% (w/w), preferably from 0.03 to 20 wt.% (w/w), more preferably from 0.05 to 10 wt.% (w/w), still more preferably from 0.5 to 5 wt.% (w/w).

Also, the amount of the tea aromatizing liquid composition of the present invention added to a beverage or food can be determined using, as an index, the content(s) of dimethyl sulfide and/or β-ionone. For example, the tea aromatizing liquid composition of this invention can be added to a beverage or food so as to ensure that the dimethyl sulfide content in the beverage or food falls within the range of from 1 to 2500 ppb (w/w), preferably from 5 to 2000 ppb (w/w), more preferably from 10 to 1000 ppb (w/w), still more preferably from 100 to 500 ppb (w/w). For example, the tea aromatizing liquid composition of this invention can be added to a beverage or food so as to ensure that the β-ionone content in the beverage or food falls within the range of from 0.05 to 100 ppb (w/w), preferably from 0.2 to 80 ppb (w/w), more preferably from 0.4 to 60 ppb (w/w), still more preferably from 4 to 40 ppb (w/w).

### (Production method)

Hereunder, the method for producing the tea aromatizing liquid composition of the present invention will be described. In another embodiment, this invention can be directed to a method for producing a tea aromatizing liquid composition, the method comprising the steps described later in subsequent paragraphs.

The tea aromatizing liquid composition of the present invention can be produced through the step of distilling tea leaves. Tea leaves used as a source ingredient are as described above in preceding paragraphs. In this invention, tea leaves grown by shielding the sunlight before picking up, such as *Kabuse-cha, Gyokuro* or *Tencha,* can be preferably used as a source material.

The form of tea leaves used as a source material is not particularly limited -- fresh tea leaves, roasted tea leaves, or fermented tea leaves may be used. Before steam distillation is done, tea leaves may be heat treated or may be subjected to further steps such as grinding or moistening depending on the need. Examples of the method for moistening tea leaves include soaking tea leaves in water, and spraying water on tea leaves with an atomizer or the like. When tea leaves are soaked in water, the tea leaves may be stirred in a soaked state. The amount of water used to moisten tea leaves is not particularly limited, and water is used in an amount of, for example, from 0.1 to 5 times by weight, preferably from 0.3 to 3 times by weight, more preferably from 0.5 to 2 times by weight, relative to the weight of the tea leaves which is taken as 1.

Distillation of tea leaves is performed typically using a steam distillation method. Steam distillation is a method in which steam is passed through a source material (tea leaves) and aroma components distilled out together with steam are aggregated by cooling. Exemplary modes of steam distillation that can be adopted include atmospheric steam distillation, vacuum steam distillation, and gas-liquid multistage countercurrent contact distillation (spinning cone column). In this invention, atmospheric steam distillation is preferably used. During the process of steam distillation, aroma components are distilled out in large amounts at an early stage of distillation and thereafter the amount of aroma components distilled decreases gradually. The timing of terminating distillation can be determined, as appropriate, depending on the desired amounts of aroma components, economic efficiency or the like. Steam distillation of tea leaves can be performed using a steam distillation apparatus known to skilled artisans.

Steam distillation of tea leaves is typically performed by a blow-in type steam distillation method. The blow-in type steam distillation is a method in which steam is brought into direct contact with a source material (tea leaves) placed in a container such as basket, and the steam passed through the source material is collected and cooled to obtain a distillate. The flow rate of steam used in the blow-in type steam distillation can be set to, for example, from 1 to 40 kg/hr, preferably from 5 to 30 kg/hr, more preferably from 7 to 20 kg/hr. The pressure of steam used in the blow-in type steam distillation is in the range of, for example, from 0.05 to 0.5 MPa, preferably from 0.1 to 0.4 MPa, more preferably from 0.15 to 0.3 MPa, in the mode of atmospheric steam distillation. The distillation temperature used in the blow-in type steam distillation is not particularly limited, but is preferably 100°C, in the mode of atmospheric steam distillation.

In the steam distillation method, condensation is carried out for collecting a fraction. The condensation can be performed at a temperature of, for example, not more than 30°C, preferably not more than 25°C, more preferably not more than 20°C. The procedure for the condensation treatment is not particularly limited -- for example, the condensation can be performed using a refrigerant for cooling. As the refrigerant, an antifreeze solution or the like can be used. The temperature of the refrigerant can be set to, for example, not more than 20°C, preferably not more than 15°C, more preferably not more than 10°C. The flow rate of the refrigerant used for condensation can be set to, for example, from 10 to 70 L/min., preferably from 15 to 50 L/min., more preferably from 20 to 40 L/min. The time of collecting a distillate can be determined, as appropriate, depending on the intended purpose, but is in the range of, for example, from 5 minutes to 2 hours, preferably from 10 minutes to 1 hour, more preferably from 15 to 45 minutes, after the start of collecting the distillate. In this invention, when a distillate is collected by steam distillation at a weight percentage of, for example, about from 20 to 70% relative to the weight of a source material, a tea aromatizing liquid composition with a Brix value of less than 1% can be obtained.

In the present invention, the tea aromatizing liquid composition obtained in the aforementioned manner can be further subjected to a concentration step to enhance the concentrations of aroma components. By concentrating the tea aromatizing liquid composition of this invention, a tea aromatizing liquid composition with higher potency can be obtained, thereby leading to reduction of the amount of a tea aromatizing liquid composition added to beverages and foods, and enabling addition of higher concentrations of aroma components to beverages and foods.

Concentration of a tea aromatizing liquid composition is typically performed by a distillative concentration method. The distillative concentration can be performed by, for example, employing a procedure in which a tea aromatizing liquid composition is placed in a still and boiled by heating from the bottom to collect aroma components distilled out together with steam. For the distillative concentration, an atmospheric distillative concentration method or a vacuum distillative concentration method can be employed. In this invention, the vacuum distillative concentration method is preferably employed. Distillative concentration of a tea leaf distillate can be performed using a distillator known to skilled artisans.

When distillative concentration of a tea aromatizing liquid composition is performed by a vacuum distillative concentration method, the flow rate of steam can be set to, for example, from 0.1 to 80 kg/hr, preferably from 1 to 60 kg/hr, more preferably from 3 to 40 kg/hr. The pressure of steam used for heating during the vacuum distillative concentration is in the range of, for example, from 0.1 to 0.5 MPa, preferably from 0.15 to 0.4 MPa, more preferably from 0.2 to 0.3 MPa. The distillation temperature used in the vacuum distillative concentration is in the range of, for example, from 10 to 100°C, preferably from 20 to 70°C, more preferably from 35 to 55°C. The degree of pressure reduction employed in the vacuum distillative concentration can be set to, for example, from 0 to -0.101 MPa, preferably from -0.050 to -0.099 MPa, more preferably from -0.075 to -0.095 MPa, as expressed on a gauge pressure basis.

During the process of distillative concentration, like in the process of steam distillation as mentioned above, aroma components are distilled out in large amounts at an early stage of distillation and thereafter the amount of aroma components distilled decreases gradually. The timing of terminating distillation can be determined, as appropriate, depending on the desired amounts of aroma components, economic efficiency or the like. The concentration factor is determined at the time of terminating distillation. The condensation treatment for collecting a fraction distilled at the distillative concentration step can be performed at a temperature of, for example, not more than 30°C, preferably not more than 25°C, more preferably not more than 20°C. Like in the case of the condensation treatment at the steam distillation step as mentioned above, the procedure for the condensation treatment at the distillative concentration step is not particularly limited. For example, the condensation can be performed using a refrigerant for cooling. As the refrigerant, an antifreeze solution or the like can be used. The temperature of the refrigerant can be set to, for example, not more than 20°C, preferably not more than 15°C, more preferably not more than 10°C. The flow rate of the refrigerant used for condensation can be set to, for example, from 10 to 70 L/min., preferably from 15 to 50 L/min., more preferably from 20 to 40 L/min. The time of collecting a distillate at the distillative concentration step can be determined, as appropriate, depending on the intended purpose, but is in the range of, for example, from 2 minutes to 1 hour, preferably from 5 to 45 minutes, more preferably from 10 to 30 minutes, after the start of collecting the distillate. In this invention, by performing the distillative concentration step, a concentrated distillate can be collected at a weight percentage of from 3 to 20% relative to the weight of a tea aromatizing liquid composition before concentration, or namely a tea aromatizing liquid composition with a concentration factor of about from 5 to 30 times can be obtained.

Also, an operation called salting-out may be performed at the step of distillative concentration (preferably, vacuum distillative concentration). By performing the salting-out treatment, water molecules can be attracted by the polarity of a salt in a distillate placed in a still, thereby promoting the vaporization of organic compounds. The salting-out treatment can be performed by incorporating a salt into a distillate to be concentrated. For example, the salting-out can be performed by introducing a salt into a still before or during the distillative concentration treatment, or by adding in advance a salt to a distillate to be concentrated and subjecting the salt-containing distillate to the distillative concentration treatment.

The salt used for salting-out is typically sodium chloride. The amount of a salt used for salting-out is in the range of, for example, from 0.01 to 10 wt.% (w/w), preferably from 0.05 to 6 wt.% (w/w), more preferably from 0.5 to 3 wt.% (w/w), relative to the weight of a distillate before concentration.

The tea aromatizing liquid composition of the present invention may be produced through taking a further step of treatment with activated carbon. By performing activated carbon treatment, the amounts of unwanted aroma components can be reduced. As referred to herein, the term "activated carbon" refers to a porous, carbon-based substance produced through activation of carbon-containing materials such as wood at high temperatures.

The shape of activated carbon used is not limited, but powder activated carbon is preferably used in the present invention. The average pore diameter of powder activated carbon is not particularly limited, and is in the range of, for example, from 0.3 to 30 nm, preferably from 0.5 to 20 nm, more preferably from 1 to 15 nm, still more preferably from 1 to 5 nm. The average pore diameter of powder activated carbon can be measured using a specific surface area/pore distribution measurement apparatus known to skilled artisans.

The origin of activated carbon is not particularly limited, and can be selected from, for example, wood-derived activated carbon, coconut husk-derived activated carbon, bamboo-derived activated carbon, rice husk-derived activated carbon, and the like. One type of these activated carbons may be used alone, or two or more types of them may be used in combination. In the present invention, wood-derived activated carbon and coconut husk-derived activated carbon are preferred, with wood-derived activated carbon being particularly preferred.

The procedure for activated carbon treatment is not particularly limited. For example, the treatment with powder activated carbon is performed by employing a procedure in which powder activated carbon is added to the tea aromatizing liquid composition of the present invention and, after the mixture is left for an appropriate time, the powder activated carbon is removed using a filter or the like. The amount of powder activated carbon added, expressed in terms of relative concentration to the weight of the tea aromatizing liquid composition, can be set to, for example, from 10 to 1000 ppm (w/w), preferably from 50 to 300 ppm (w/w), more preferably from 75 to 125 ppm (w/w). The time of contact of the tea aromatizing liquid composition of this invention with powder activated carbon can be set to, for example, from 1 to 60 minutes, preferably from 3 to 30 minutes, more preferably from 5 to 20 minutes. During the process of contacting the tea aromatizing liquid composition of this invention with powder activated carbon, stirring or other similar operations may be performed. The treatment temperature employed in the activated carbon treatment can be set to, for example, from 1 to 25°C, preferably from 2 to 20°C, more preferably from 3 to 10°C.

In the tea aromatizing liquid composition obtained in the aforementioned manner, different aroma components including, but not particularly limited to, dimethyl sulfide and β-ionone, may be further added. As mentioned above, the tea aromatizing liquid composition of this invention can be added to beverages and foods, so that the green laver aroma of the beverages and foods can be enhanced. For this reason, in another embodiment, this invention can be directed to a method for enhancing the green laver aroma of a beverage or food, the method comprising a step of adding the tea aromatizing liquid composition obtained through the aforementioned steps to the beverage or food.

### EXAMPLES

Hereunder, the present invention will be described by way of working examples, but this invention is not limited to these examples.

### 1. Preparation of tea aromatizing liquid compositions

### (1) Preparation of a tea aromatizing liquid composition by steam distillation

Twelve kilograms of commercial *Kabuse-cha* tea leaves were mixed with 12 kg of water, and the mixture was stirred by hand to moisten the tea leaves so as to avoid a bias of the water content in the tea leaves. Next, the tea leaves were put in a basket placed in a steam still, and blow-in type steam distillation was performed at a steam pressure of 0.25 MPa, a steam flow rate of 16 kg/hr, and a steam temperature of 100°C (atmospheric pressure). Then, condensation was carried out at cooling refrigerant temperatures of 4°C for supply and 6°C for return, and at a refrigerant flow rate of 30 L/min., to collect a distillate. The time of distillate collection was set to 30 minutes after the distillate started to distill out. The amount of the distillate collected was 7.38 kg. This operation was repeated twice to obtain a total of 15.18 kg of distillate (tea aromatizing liquid composition).

### (2) Activated carbon treatment

The tea aromatizing liquid composition obtained at the aforementioned step was treated with activated carbon. To be specific, 1.52 g of wood-derived powder activated carbon (Shirasagi WP-Z; produced by Osaka Gas Chemicals Co., Ltd.) with an average pore diameter of 3 nm was added to 15.18 kg of the distillate, and the mixture was stirred with a stirrer for 10 minutes. Then, the activated carbon was removed from the distillate using a filter paper (ADVANTEC, No.2). The treatment temperature used during the activated carbon treatment was set to 5.7°C.

### (3) Vacuum distillative concentration

Ten kilograms of the tea aromatizing liquid composition treated with activated carbon in the aforementioned manner was placed in a still, and the interior of the still was depressurized to -0.09 MPa using a vacuum pump. The depressurized still was heated at a steam flow rate of from 5 to 15 kg/hr and a steam pressure of 0.25 MPa to raise the temperature of the distillate to 40 to 50°C. Then, condensation was carried out at cooling refrigerant temperatures of 4°C for supply and 6°C for return, and at a refrigerant flow rate of 31 L/min., to collect a distillate. The time of distillate collection was set to 15 minutes after the distillate started to distill out. The amount of the distillate collected was 0.993 kg in total (concentrated to 10-fold).

All of such tea aromatizing liquid compositions as obtained by the different treatments mentioned above were felt to have excellent green laver aroma. As a result of analyzing these tea aromatizing liquid compositions, different aroma components were detected, such as dimethyl sulfide, β-ionone, α-ionone, β-cyclocitral, (z)-3-hexenol, 1-penten-3-ol, and nerolidol With the presence of dimethyl sulfide and β-ionone being particularly focused among those aroma components, the concentrations of these two components in the different tea aromatizing liquid compositions were measured by following the procedure described below.

### <Calibration curve>

Standard stock solutions (in ethanol solvent) were prepared so as to ensure that each of the aroma components of interest was present at a concentration of 1000 ppm. Each stock solution was diluted with pure water to concentrations of 0.004, 0.02, 0.05, 0.1, 0.2, and 0.5 ppm. 10 mL each of the prepared solutions was transferred into a 20 mL glass vial containing 3 g of sodium chloride, and the thus obtained samples were used for calibration curve plotting.

### <Preparation of an analysis sample>

A tea aromatizing liquid composition was diluted with pure water, as appropriate, to give a concentration that fell within the concentration range of the calibration curve, and 10 mL of the diluted tea aromatizing liquid composition and 3 g of sodium chloride were placed in a 20 mL glass vial to thereby prepare an analysis sample.

### <Component analysis>

The concentrations of the different aroma components were measured using a gas chromatographic analysis system (Flash GC Nose HERACLES II; produced by Alpha M.O.S. Japan K.K.).

### (Sampling parameters)

| | |
|---|---|
| Incubation: 60°C | for 15 min. |
| Syringe: temperature: | 70°C; cleaning after injection: 90 sec. |
| Headspace injection: | 5000 µL at 250 µL/sec. |
| (System parameters) | |
| Column 1: | MXT-5(slight polarity, 10 m, 180 µm ID, 0.4 µm) |
| Column 2: | MXT-WAX (high polarity, 10 m, 180 µm ID, 0.4 µm) |
| Carrier gas flow rate: | hydrogen 1.6 mL/min. |
| Hydrogen flame ionization detector (FID) temperature: | 260°C |
| Injector temperature: | 200°C |
| Oven temperature: | 40°C (5 sec.), then raised at 1.5°C/sec. to 250°C (90 sec.) |
| Injection time: | 125 sec. |
| Trap temperature: | 50°C for adsorption, 240°C for desorption |
| Trap time: | 130 sec. for adsorption, 35 sec. for preheating |

The results of the measurement of aroma component concentrations were as shown in the table given below.

**[Table 1]**

| | Tea aromatizing liquid composition | | |
|---|---|---|---|
| | Steam distillation | Activated carbon treatment | Vacuum distillative concentration |
| Dimethyl sulfide | 17046 ppb | 6973 ppb | 13166 ppb |
| β-Ionone | 1610 ppb | 169 ppb | 3664 ppb |

The concentrations of other aroma components were measured under the conditions detailed below. The results obtained were as shown in the table given below.

### <Component analysis>

Analysis samples prepared by the same procedure as mentioned above were loaded into a gas chromatography/mass spectroscopy system (produced by Agilent Technologies) to measure the concentrations of different aroma components by a multi-volatile method (MVM) using a MPS produced by Gestel.

System:

| | |
|---|---|
| GC: | GC7890B, produced by Agilent Technologies |
| MS: | 5977A, produced by Agilent Technologies |
| HS: | MPS, produced by Gestel |
| Tube: | Tenax TA, Carbon bx1000 |
| Column: | HP-INNOWAX, 60 m × 0.25 mm i.d., df = 0.25 µm |
| Temperature conditions: | 40°C (4 min.), then raised at 5°C/min. to 260°C |
| Carrier gas flow rate: | He 1.5 mL/min. |
| Injection method: | Splitless |
| Ion source temperature: | 260°C |

**[Table 2]**

| | Tea aromatizing liquid composition | | |
|---|---|---|---|
| | Steam distillation | Activated carbon treatment | Vacuum distillative concentration |
| α-Ionone | 1.45 ppm | 0.09 ppm | 6.04 ppm |
| β-cyclocitral | 0.97 ppm | 0.22 ppm | 5.97 ppm |
| (z)-3-Hexenol | 0.23 ppm | 0.24 ppm | 3.25 ppm |
| 1-Penten-3-ol | 5.07 ppm | 6.65 ppm | 52.49 ppm |
| Nerolidol | 4.11 ppm | 0.24 ppm | 2.27 ppm |

### 2. Study on the ratio of aroma components in tea aromatizing liquid compositions

Based on the measurement results given above, a focus was placed on the content ratio of dimethyl sulfide and β-ionone, and in particular, a study was made on the weight ratio of β-ionone content to dimethyl sulfide content (β-ionone/dimethyl sulfide).

First, to prepare a base sample, an activated carbon-treated tea aromatizing liquid composition, which has been prepared separately from the compositions prepared above, was further treated with activated carbon. The activated carbon treatment was performed by adding the wood-derived activated carbon mentioned above to the tea aromatizing liquid composition to give a concentration of 300 ppm and stirring the mixture for 20 minutes. The obtained sample was found to have a dimethyl sulfide concentration of 6088 ppb and a β-ionone concentration of nearly 0 ppb (below the limit of detection).

Then, the above-obtained base sample was diluted with purified water, and to the dilution, a β-ionone reference standard was added to give such final dimethyl sulfide and β-ionone concentrations as indicated in the table given below, whereby different concentrations of samples were prepared. Since the β-ionone concentration in the reference standard was unknown, concentration measurement of the reference standard had been done by gas chromatography in advance. To be specific, the β-ionone reference standard was diluted with 50 to 5000 times its weight of pure water to adjust its concentration, as appropriate, to lie within the range of the calibration curve, whereby a sample for concentration measurement was prepared. The gas chromatographic analysis was done by following the same procedure as mentioned above.

The different samples prepared using the reference standard were subjected to sensory evaluation by three panelists who were well trained in aroma evaluation. In this sensory evaluation, the extent of green laver aroma felt from the samples was rated according to the five-point rating scale as detailed below, with half-point increments, and the ratings provided by the panelists were finally averaged. In this evaluation, the different samples were rated with respect to the base sample (Sample 1) prepared above, which was rated 3 points.
1: Little green laver aroma is felt.
2: Green laver aroma is not much felt.
3: Green laver aroma is felt.
4: Green laver aroma is felt in a sustained way (excellent in green laver aroma).
5: Green laver aroma is felt in a more sustained way (extremely excellent in green laver aroma).

**[Table 3]**

| | Dimethyl sulfide (ppb) | β-Ionone (ppb) | β-Ionone/dimethyl sulfide | Rating |
|---|---|---|---|---|
| Sample 1 | 251 | 0 | 0.000 | 3.0 |
| Sample 2 | 251 | 5 | 0.020 | 3.3 |
| Sample 3 | 251 | 40 | 0.158 | 3.7 |
| Sample 4 | 251 | 149 | 0.594 | 4.2 |
| Sample 5 | 251 | 502 | 2.002 | 4.2 |
| Sample 6 | 250 | 753 | 3.008 | 3.7 |
| Sample 7 | 250 | 1001 | 4.004 | 2.8 |

As shown in the above table, it was found that when β-ionone was contained in samples and moreover the weight ratio of β-ionone content to dimethyl sulfide content (β-ionone/dimethyl sulfide) fell within the specified range, excellent green laver aroma was felt from the samples in a sustained way.

Free comments offered by the panelists who participated in the sensory evaluation are as summarized below. In Sample 1, green laver aroma was felt as a top note, whereas in Sample 2, not only green laver aroma was felt as a top note, but also a slight afterglow of green laver aroma was felt to remain in the latter half of drinking time. In Sample 3, sweet green laver aroma was felt as a middle note in the middle and the latter half of drinking time, and an impression of richness was felt to be increased. In Sample 4, it was felt that sweet green laver aroma became stronger and an afterglow of green laver aroma lingered longer in the middle and the latter half of drinking time. Also, a good balance between green and sweet aromas was felt to be achieved in Sample 4. Likewise, also in Sample 5, it was felt that sweet green laver aroma became stronger and an afterglow of green laver aroma lingered longer in the middle and the latter half of drinking time. Further, a good balance between green and sweet aromas was also felt to be achieved in Sample 5. In Sample 6, robust green laver aroma was felt, but the aroma smelled a little heavy in the latter half of drinking time. In Sample 7, heavy aroma was strongly felt, so that rich aroma as a top note was reduced and the overall aroma was felt to be heavy.

### 3. Effects of tea aromatizing liquid compositions

A tea aromatizing liquid composition (dimethyl sulfide concentration: 11879 ppb; β-ionone concentration: 2157 ppb) was prepared through activated carbon treatment and vacuum distillative concentration, and added to a commercially available tea beverage (*Iyemon;* produced by Suntory) for carrying out sensory evaluation. To be specific, the tea aromatizing liquid composition was added to 200 mL of the tea beverage in varied amounts as shown in the table given below, and the prepared tea beverage samples were subjected to sensory evaluation by four panelists who were well trained in aroma evaluation. In this sensory evaluation, the tea beverage samples were evaluated by overall rating that included the extent of improvement in tea beverage quality achieved by addition of green laver aroma, and the intensity of perceived green laver aroma. The ratings were given on a five-point scale from 1 point (low score) to 5 points (high score) with half-point increments, and finally averaged. In this evaluation, the different tea beverage samples were rated with respect to the control tea beverage (Tea beverage 1), which was prepared without addition of the tea aromatizing liquid composition and was rated 3 points.

**[Table 4]**

| | Tea aromatizing liquid composition | | Rating |
|---|---|---|---|
| | Amound added (µL) | Concentration added (v/v) | |
| Tea beverage 1 | 0 | 0% | 3.0 |
| Tea beverage 2 | 850 | 0.42% | 5.0 |
| Tea beverage 3 | 1700 | 0.84% | 5.0 |
| Tea beverage 4 | 5180 | 2.52% | 5.0 |
| Tea beverage 5 | 10650 | 5.06% | 5.0 |

The results are as shown in the table given above. It was shown that by adding a tea aromatizing liquid composition, adequate green laver aroma was successfully added to tea beverages, and the quality of the tea beverages was significantly enhanced.

### 4. Brix value measurement

Three different tea aromatizing liquid compositions were prepared through steam distillation, and measured for Brix value. Further, these tea aromatizing liquid compositions were treated by activated carbon and vacuum distillative concentration, and the prepared compositions were measured for Brix value. The measurement of Brix value was done using a digital refractometer (produced by Atago Co., Ltd.).

**[Table 5]**

| | Tea aromatizing liquid composition | |
|---|---|---|
| | Steam distillation | Activated carbon treatment & Vacuum distillative concentration |
| #1 | 0.05 | 0.12 |
| #2 | 0.03 | 0.12 |
| #3 | 0.03 | 0.17 |

The results are as shown in the table given above. All of the compositions obtained both before and after the concentration were found to have a Brix value of not more than 0.50.

## Claims

1. A tea aromatizing liquid composition comprising dimethyl sulfide and β-ionone, and having a weight ratio of β-ionone content to dimethyl sulfide content of from 0.01 to 3.5.

2. The composition according to claim 1, further comprising at least one aroma component selected from the group consisting of α-ionone, β-cyclocitral, (z)-3-hexenol, 1-penten-3-ol, and nerolidol.

3. A beverage or food comprising the composition according to claim 1 or 2.

4. The beverage or food according to claim 3, wherein the beverage or food is a beverage.
